# DEMANDE DE BREVET EUROPEEN

(11) **EP 2 107 616 A2**
(43) Date de publication de la demande: **07.10.2009**
(21) Numéro de dépôt: 09368006.4
(22) Date de dépôt: 02.03.2009
(51) Int. Cl.: H01L 31/042, H01L 31/045

(54) **Véhicule électrique de type camping-car, énergétiquement autonome, comportant une station photovoltaïque de 1 à 6 kW de puissance**

(30) Priorité: 05.03.2008 FR 0801208
(71) Demandeur: Roard, Dany Lilian, 06250 Mougins (FR)
(72) Inventeur: Roard, Dany Lilian, 06250 Mougins (FR)

(57) **Abrégé**

Il s'agit d'un véhicule électrique de type Camping-car qui utilise, comme principale source d'énergie motrice, l'énergie électrique produite par une station Photovoltaïque embarquée, amovible, placée sur le toit de la structure d'habitation qui se continue par une avancée sur la cabine de conduite. L'énergie produite pendant les déplacements ne couvre qu'une partie de ses besoins mais à l'arrêt, la station photovoltaïque embarquée recharge, en électricité, les moyens de stockage du véhicule, batteries ou condensateurs, permettant ainsi la régénération de l'autonomie de déplacement du véhicule.

La station Photovoltaïque embarquée comporte 2 à 6 unités de panneaux solaires et a une surface minimale de 10 m², ces unités peuvent être constituées :
- soit d'une seule surface photovoltaïque de 3 à 6 m² et dans ce cas chaque panneau est orientable manuellement ou automatiquement grâce à ses 3 points d'articulation, placés sous chaque panneau et poussés par des bras et des vérins qui viennent agir pour optimiser l'orientation du panneau vers le soleil selon le maximum d'ampères obtenus,
- soit de plusieurs surfaces photovoltaïques superposées de 3 à 6 m², capables de se déployer par un jeu de glissières ou de bras.

La station embarquée autonome possède, suivant les choix opérés, une puissance de 1 à 6 kW. Compte tenu de cette puissance énergétique disponible, ce Camping-car solaire constitue lorsqu'il revient à son parking, à l'égal des stations photovoltaïques installées sur nos toits, une alimentation autosuffisante pour les besoins électriques de l'habitat immobilier. De plus, cette station est conçue pour être aisément démontable de son véhicule porteur, pour être soit placée sur un autre véhicule (notamment quand le véhicule porteur est devenu hors d'âge), soit installée sur un portique conçu à cet effet, c'est-à-dire équipé d'une potence et d'un treuil, pour faciliter son enlèvement de toit du Camping-car et la placer en position surélevée sur ce même portique où elle pourra être déployée et sécurisée, aux fins d'alimenter la maison et le Camping-car et de constituer un abris pour ce dernier.

## Description

### CHAMP

La présente invention concerne l'énergie solaire. Plus particulièrement, une station photovoltaïque, de forte puissance ( 1 à 6 kW ), embarquée sur le véhicule automobile électrique de type Camping-car, pour lequel elle a capacité assurer la charge de la batterie d'accumulateurs d'électricité, servant, entre autres, à la fourniture d'énergie électrique motrice du moteur électrique du véhicule utilitaire léger de 3.5 T de poids total roulant autorisé.

### ARRIERE PLAN TECHNOLOGIQUE

L'énergie solaire est une énergie attractive parce que propre et inépuisable, depuis longtemps elle intéresse pour des applications liées à l'automobile. Pourtant, force est de constater que les véhicules qui utilisent comme quasi seule source d'énergie l'énergie photovoltaïque (des batteries sont là, quand même, pour amortir les pertes d'énergie dues aux passages dans des zones ombragées) et qui se confrontent dans des défis annuels, ressemblent plus à de monstrueux scarabées larges et plats qu'aux véhicules rencontrés tous les jours sur nos routes.
Pour autant, l'énergie photovoltaïque inspire et nous trouvons nombre de développements liés à la fourniture d'électricité aux batteries de petits véhicules électriques ou des apports à l'énergie électrique consommée par le véhicule ou encore la caravane, pour les besoins de l'éclairage ou de la climatisation.

Ainsi, le brevet US 2007/0261896 A1, intègre dans un véhicule un ou plusieurs éléments de carrosserie possédant des capacités photovoltaïques ainsi que des capacités de transformer les écarts de température en source d'énergie électrique, pour alimenter des batteries d'accumulateurs, contribuant ainsi à l'approvisionnement en énergie électrique.

Le Brevet US 4,181,188 décrit un véhicule électrique capable de s'insérer dans la circulation, constitué d'une carrosserie étroite pouvant recevoir deux passagers l'un derrière l'autre. Les batteries de ce type de véhicule sont rechargées par le mouvement des pédales, par l'énergie du vent et par un ensemble de cellules photovoltaïques placées sur la voûte extérieure du toit de la carrosserie. Il semble là, que la puissance des éléments photovoltaïques soit d'environ 300 W.

Le Brevet FR 88 07453 décrit des panneaux solaires que l'on peut placer comme une baie vitrée de caravane, sachant que l'on peut relever le panneau photovoltaïque pour avoir une bonne incidence des rayons solaires sur la surface, l'énergie produite est emmagasinée dans une batterie pour servir les besoins électriques de la caravane.

Le Brevet DE 37 33751 A1 reprend cette idée mais en partant de panneaux solaires placés, cette fois, sur une petite partie du toit, ces panneaux suivant les modèles peuvent être, soit relevés, soit se redresser sur un pied et pivoter autour d'un axe pour en améliorer l'ampérage produit, la puissance espérée est de l'ordre de 100 à 200 W.

Le Brevet FR 99 11806, toujours sur une caravane, reprend cette idée de panneau photovoltaïque orientable par pivotement autour d'un mat et inclinaison par rapport à ce mat, pour éviter les effets d'arrachement dus aux effets de couple exercés par le vent sur la surface du panneau solaire, d'environ 1 m² de surface, et pour assurer le pivotement du panneau et les différents contrôles de positionnement, le mat traverse le toit de la caravane et est assujetti sur une paroi à l'intérieur de la caravane, ce système convient apparemment bien pour un panneau de petite surface mais est inadaptée pour de grandes surfaces, la force du vent étant proportionnelle à la surface projetée mais encore augmentant selon le carré de la vitesse du vent, on voit que pour un panneau de 3 voire 6 m² la section du mat en acier ne serait plus de 6 ou 7 cm de diamètre mais de 15 ou 30 cm, en fonction de la nature du matériau et de la surface photovoltaïque, ce qui se traduirait par un encombrement notable et un surcroît de poids important.

Le Brevet EU 09195534, quitte la caravane pour une unité mobile d'habitation, isolée, pour laquelle l'eau est comptée, qui utilise 4 panneaux photovoltaïques relevables ou une éolienne couplée à un groupe électrogène pour alimenter en énergie électrique un système de récupération et d'épuration de l'eau ainsi que les besoins de l'unité d'habitation en énergie électrique pour atteindre des conditions de confort d'habitation correctes.

Le brevet DE 311 180 A1 en s'inspirant des solutions déjà utilisées pour les voitures de tourisme, se soucie du confort des passagers d'un bus de transport et de l'environnement. Confrontés aux nécessités de conditionnement de l'air ambiant l'été comme l'hiver notamment lorsque le bus est à l'arrêt et que les passagers y demeurent, il profite de l'étendue du toit du véhicule de transport pour placer, sur une partie, un à plusieurs panneaux solaires recouverts chacun de 2 panneaux solaires égaux en taille et auxquels ils sont reliés par une charnière, selon les deux bords tournés vers l'extérieur du bus, ceci afin de développer une surface suffisante capable de produire l'énergie électrique nécessaire à l'alimentation de la ventilation et du conditionnement de l'air à l'intérieur du bus.

Le Brevet FR 2841205, concerne un véhicule sur le toit duquel est fixé un ensemble de cellules photovoltaïques pour produire de l'énergie électrique. L'énergie produite avoisine les 100 Watts et permet de faire fonctionner une bonne partie des matériels électriques annexes de la voiture : ventilateurs, éclairage ou climatisation (!?!), on est loin des 30 kW nécessaires pour faire se déplacer un véhicule léger(- de 3.5T) et l'insérer dans la circulation automobile.

Le Brevet FR 9712398, propose aussi d'assurer une partie de la consommation de l'appareillage électrique, dont l'alternateur, au moyen d'un module solaire photovoltaïque polycristallin installé sur le véhicule.

Le Brevet W0046056 porte encore sur un ensemble photovoltaïque de charge placé sur le toit d'un véhicule électrique ou même intégré à la structure du toit

Le Brevet FR 83 13681 propose un système de production d'électricité photovoltaïque, fixé comme une galerie et déployable, c'est-à-dire capable de doubler la surface photovoltaïque et d'après les éléments fournis d'atteindre une puissance d'environ 200 W. A noter encore que les éléments supérieurs sont reliés à l'élément de base par des charnières qui autorisent la rotation pour donner une surface développée double de celle initiale. Outre la production d'énergie qui reste faible, il y a le problème de l'accessibilité au dispositif qui peut susciter des dégradations, du vandalisme voire même des vols.

Le Brevet DE 40 03 513 A1 s'inspire et développe le précédent brevet pour alimenter une petite voiturette électrique. Le système, toujours fixé comme une galerie, lorsqu'il incorpore des éléments photovoltaïques d'angle au montage, développe jusqu'à 6 fois la surface initiale, c'est-à-dire atteint, une fois la totalité des surfaces photovoltaïques déployées, environ 6 à 7 m² et laisse espérer une puissance de 800 W. En outre, le panneau ainsi constitué dispose de bras qui peuvent être placés d'un même côté ce qui permet de choisir de relever le côté opposé au soleil pour améliorer l'incidence des rayons solaires sur la surface photovoltaïque. L'ensemble de la structure est très léger et compte tenu de la surface du panneau photovoltaïque une fois les panneaux déployés, il est important de rester dans le voisinage du véhicule pour que l'ensemble ne soit pas détérioré par une saute de vent. Là, encore même remarque, si le système cette fois apporte une énergie qui permet d'assurer en partie ou en totalité les besoins de la voiturette, l'accessibilité directe au dispositif non seulement demeure mais est amplifiée, ce qui fait que, outre les dommages que pourrait occasionner le vent à cette installation, les mêmes facilités pour les dégradations, le vandalisme et le vol sont encore réunies.

Le Brevet DE 4028937 A1 est le plus intéressant en ce qui concerne la présente invention, il reprend le principe du précédent brevet mais place cette fois la surface photovoltaïque sur une petite remorque d'habitation à deux places (450 kg et 2m50 de longueur) tiré par un petit véhicule électrique léger (400kg). Il profite de la surface offerte par les parties supérieures de la caravane, en particulier de son toit réhaussable (pour en améliorer l'habitabilité, le volet du toit relevé, au plus haut le passager ne dispose que de 1m60) pour y placer un panneau photovoltaïque qui du fait de l'inclinaison du toit prend une orientation voisine de trente degrés. Dans le prolongement du panneau solaire inclinable, sur le pan avant du toit de la carrosserie de la caravane, est placé un autre panneau solaire faisant environ la moitié de la surface du premier. L'ensemble fait environ 5 m² de surface photovoltaïque et possède un rendement satisfaisant car la puissance de l'ensemble est donnée pour 700 W. Les données avancées pour la consommation de courant du véhicule sont de 10 KWh pour deux personnes pour 100 km parcourus à 60-70 km/h. Cette unité semi-remorque, véhicule et remorque, a une longueur d'environ 4m20 à 4m50, elle est animée par un moteur dont la puissance est de 15 kW, l'autonomie est d'environ 160 km. Le véhicule tracteur possède sa propre autonomie électrique et peut encore à l'étape évoluer de manière autonome lors de petits déplacements, ce qui présente un avantage indéniable lors des déplacements en ville. L'idée développée ici est astucieuse mais nécessite de développer un véhicule électrique léger particulier ainsi que sa remorque d'habitation, ce qui peut constituer un frein considérable à la réalisation de ce projet. Tout comme dans les projets précédent, si la surface photovoltaïque parait moins sensible aux effets du vents, il demeure toujours cette accessibilité aux gestes de détérioration, de vandalisme et de vols, lesquels vont peser sur la qualité des vacances prises par les utilisateurs de ce petit attelage voiturette - mini caravane.

Ce que nous constatons, c'est que tous les brevets ayant trait à l'alimentation du moteur de véhicules électriques (à l'exception du dernier brevet cité qui lui occupe le gros de la surface du toit d'une mini caravane pour 2 personnes), utilisent l'espace disponible sur les voitures type tourisme, ce qui leur impose des surfaces réduites pour l'implantation des cellules photovoltaïques, en conséquence, les contributions aux besoins énergétiques journaliers des véhicules peuvent être suffisantes lorsqu'il s'agit de véhicules très petits et, surtout, très légers (voir les brevets DE 40 03 513 A1 et DE 40 28 937 A1), pour les autres véhicules, les contributions sont modestes voire anecdotiques. En tout état de cause, pour l'ensemble des fournitures d'énergie aux moteurs électriques respectifs des véhicules, les puissances photovoltaïques relevées se situent dans la fourchette de 100 à 800W.

On est loin, pour des réalisations s'appliquant à des véhicules dont les caractéristiques correspondent à celles de ceux qui circulent sur nos routes (dont les poids se situent entre 1 et 3.5T), de servir les besoins énergétiques journaliers, d'une part, et d'autre part, s'agissant des réalisations concernées par les brevets DE 40 03513 A1 et DE 4028937 A1, elles correspondent à de petites voitures citadines dont l'une peut partir à la campagne en tirant sa « borne à essence » et l'autre, le gîte pour la nuit, ce qui est réellement intéressant mais tout de même fort éloigné des caractéristiques d'un camping-car de 3.5 T. qui doit aussi pouvoir se déplacer à 90 km/h voire à 110 km/h pour s'insérer sans peine dans le trafic normal de nos routes.

Pour la fourniture d'énergie au moteur du véhicule électrique décrit par chacun des brevets, aucun des brevets rencontrés ne revendique d'embarquer à bord une station de production d'énergie électrique de la puissance de celle que l'on place habituellement sur nos toits d'habitation, lesquels ont des puissances installées, pour la plupart, comprises entre 1 et 6 kW, encore moins, s'agissant de station d'une telle puissance, de les rendre amovibles (c'est-à-dire aisément démontables), aucun pour songer à placer de telles stations photovoltaïques sur le toit d'une voiture, ce qui se comprend fort bien, mais surtout, aucun pour songer à mettre cette taille d'installation sur le toit d'un Camping-car ni même sur le toit d'une caravane. Pourtant, il existe bien là une solution (du moins pour les Camping-cars ou les caravanes) si l'on désire que le moteur ne soit plus diesel mais plutôt électrique. Tous les éléments constitutifs existent et sont à notre portée :
- les véhicules électriques existent (avec leur batterie d'accumulateurs électriques prêts à recevoir la charge) mais sont pratiquement interdits pour ces usages du fait de leur manque d'autonomie, y compris les véhicules utilitaires légers (- de 3.5 T) qui sont proposés châssis nu tout comme leurs homologues à moteur thermique qui sont utilisés actuellement pour recevoir les aménagements en Camping-car.
- existent aussi, bien sûr, les Caravanes et les Camping-cars avec leur toits souvent tarabiscotés et parsemés de lanterneaux voire d'antennes et là, comme il s'agit d'aménagements, il suffit de penser autrement pour retrouver une forme plane rectangulaire qui sera mise à l'exacte dimension du châssis de la station Photovoltaïque pour le recevoir. La tendance des Camping-car est d'être très souvent en surcharge par rapport à leur poids total en charge autorisé et là, les 200, 300, 400 kg supplémentaires (suivant les surfaces photovoltaïques choisies) de la station photovoltaïque sont bien sûr un facteur aggravant qui, lui, se réglera en faisant choix pour les éléments non photovoltaïques de la station de matériaux composites mais encore par une cure de simplification des aménagements intérieurs de la cellule d'habitation.
- existent déjà, sur nos toits les panneaux photovoltaïques avec toute la technologie pour transformer le courant et l'onduler. Seuls leurs supports pourront être changés, comme on l'a vu précédemment, le voltage lui, pour des raisons de sécurité sera laissé en bas voltage (48 volts).

### SOMMAIRE DE L'INVENTION

Pour ce qui concerne le présent brevet, l'idée consiste à embarquer, sur un véhicule électrique utilitaire léger de 3.5 T en charge autorisé, à traction ou à propulsion électrique, carrossé en Camping-Car, une station de production d'électricité photovoltaïque amovible d'une puissance allant de 1 kW à 6 kW, suivant la surface attribuée aux récepteurs photovoltaïques, c'est-à-dire correspondant bien au format des stations photovoltaïques que l'on installe aujourd'hui sur nos toits et cela, aux fins de recharger à leur capacité maximale les batteries d'accumulateurs électriques qui alimentent le moteur du véhicule.
Les panneaux photovoltaïques disponibles actuellement sur le marché ont des rendements allant de 5 à 15 %. En sachant que les meilleurs rendements obtenus avec des panneaux photovoltaïques atteignent aujourd'hui 30% et que cette technologie, toutefois, est encore réservée au domaine spatial.
L'augmentation de la demande et la crise énergétique aidant, ces nouveaux générateurs d'électricité photovoltaïque seront sans doute, à leur tour, disponibles et proposés sur le marché à des prix accessibles. Ce qui laisse espérer à dix, voire à cinq ans, le doublement du nombre de KW produits par mètre carré de surface photovoltaïque. Pour autant, aujourd'hui et pour simplifier, 10m² apportent une puissance de 1 kW, si bien que pour servir en direct un moteur électrique de 40kW fonctionnant à plein régime, il faudrait disposer d'une surface exposée au soleil de 400 m², ce qui peut se trouver sur la surface d'un ballon dirigeable mais qui est bien difficile à mettre en oeuvre sur nos routes. Il apparaît donc que la suffisance énergétique directe d'un véhicule pesant de 1 à 3.5 T, comme nous en voyons sur nos routes, pour ne parler que des seuls véhicules « légers », ne sera pas réalisée avant longtemps et que l'autonomie énergétique passera, en attendant par un approvisionnement principal par accumulateurs électriques (batteries ou condensateurs).

Avec la présente invention, la station Photovoltaïque embarquée possède une surface tout à fait comparable à celle des stations fixes installées sur le toit des immeubles, des villas, cela lui permet d'assurer la régénération de la charge des accumulateurs d'électricité, dont la capacité est généralement comprise entre 30 et 150 kW/h, lorsque le moteur électrique utilise principalement l'énergie stockée. Cette régénération s'effectue pour partie, pendant les temps de déplacement diurnes du véhicule, en fournissant 3 à 15 % (voire davantage lors de trajet à très faible vitesse) de l'électricité consommée, l'autre partie est fournie pendant les temps d'arrêt diurnes du véhicule et le cas échéant par le raccordement durant la période nocturne à une simple prise 220 volts.

Une fois défini la taille de la station photovoltaïque à embarquer, par sa capacité à produire 1kW à 6 kW, en sachant que l'on peut aujourd'hui trouver sur le marché des panneaux solaires de silicium poly cristallins qui fournissent 115 W par mètre carré et que des composés de cuivre, indium et gallium arrivent aussi à de tels rendements, on voit qu'une installation d'une puissance de 4 kW demande environ 40 m² de surface photosensible. De telles surfaces ne se trouvent que sur les véhicules utilitaires légers, sur les caravanes ou sur les camping-cars, les poids lourds en offriraient davantage, mais leur poids obligerait à multiplier encore les surfaces photovoltaïques.

Pour le véhicule léger utilitaire, compte tenu des capacités actuelles des panneaux photovoltaïques, de l'utilisation généralement intensive du véhicule, l'utilisateur ne pourra pas prendre le temps que sa station embarquée lui recharge ses batteries d'accumulateurs d'électricité, ses déplacements se feront sur l'énergie stockée préalablement, c'est-à-dire, sous le mode habituel d'utilisation des véhicules électriques et dans ce cas l'intérêt de la station photovoltaïque embarquée est bien sûr limité.

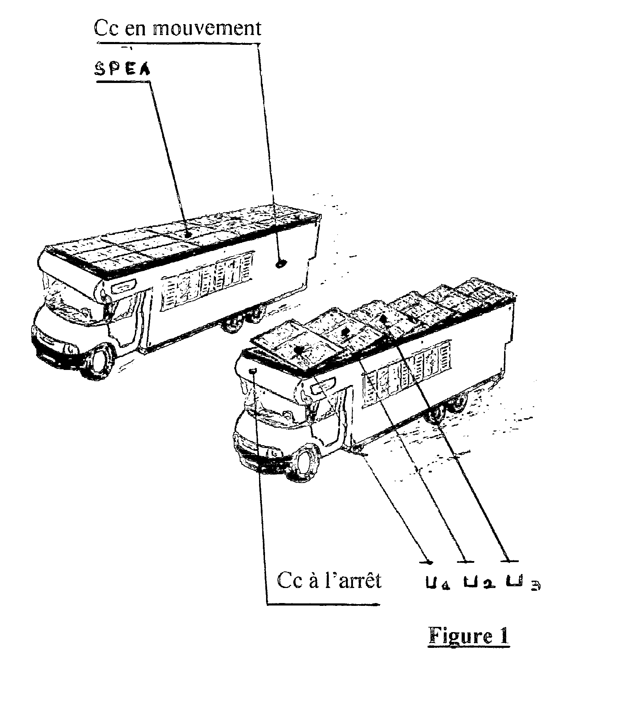

En revanche, il en va tout à fait différemment avec le véhicule type Camping-Car. En effet ce type de véhicule s'accommode, compte tenu du mode d'utilisation, d'une puissance réduite de l'ordre de 30 KW, d'une capacité de chargement réduite de l'ordre de 500 Kg. Dans le même temps, ce type de véhicule offre facilement pour la station photovoltaïque, de la capucine à l'arrière de la cellule une surface de toit, minimale utile de 10 m², de préférence 20 m² de surface utile (c'est à dire environ 9 m de longueur) et au maximum 35 m² de surface (au-delà, la longueur du véhicule devient rédhibitoire pour un véhicule de tourisme).
Ce faisant, il devient possible de couvrir 3 à 15% des besoins électromoteurs du véhicule en mouvement (c'est à dire 6 à 30% demain, ces performances étant encore réservées au domaine spatial). Le véhicule type Camping-Car s'accommode encore de la faible autonomie kilométrique propre aux véhicules électriques de l'ordre au minimum, de 160 km parcourus à 90 km/h lorsque les ressources sont les seules énergies électriques stockées (généralement 30 à 150 kW/h suivant le type de véhicule). Et puis, l'utilisateur est en vacances, il ne fait pas nécessairement ses parcours à marche forcée, il est aussi là pour profiter du paysage ! Ainsi, si le trafic s'y prête et c'est souvent le cas sur nos routes de campagne, l'utilisateur pourra avoir envie de se déplacer à 60 km/h et dans ce cas sa consommation peut tomber à 15-20 KW. Pendant les temps d'arrêt, visite, repas, repos, le véhicule recharge ses batteries (électrolytiques ou de condensateurs pour une part conséquente de leur capacité, ce qui accroît d'autant l'autonomie kilométrique. Chaque jour, comme le couple voiture-caravane du brevet DE 4028937 A1, le Camping-car solaire participe au renouvellement de son autonomie kilométrique et crée celle du lendemain, mais cette fois il ne s'agit plus de déplacer 850 kg mais un authentique Camping-car de 3.5 T, de grande habitabilité, sur le toit duquel, à 3 m de hauteur, en sécurité, une Station Photovoltaïque de forte puissance (celle que nous plaçons sur nos toits) assure l'autonomie énergétique. (figure n°1)

Pour améliorer le rendement de la station d'électricité photovoltaïque embarquée, amovible, deux dispositifs sont retenus :
- le premier consiste a utiliser la seule surface du toit de la cellule pour disposer sur la totalité les cellules photovoltaïques et chercher alors les moyens du meilleur rendement électrique,
- le second dispositif consiste à multiplier ces surfaces en deux voire en trois couches superposées qui pourrons dans les périodes d'arrêt du véhicule être déployées.

Premier dispositif : la surface photovoltaïque est unique et couvre la surface du toit de la cellule. Pour accroître la production d'électricité il faut pouvoir orienter le panneau pour que son plan reste perpendiculaire aux rayons du soleil, le toit du véhicule étant plus long que large il sera difficile d'exercer une « traque » du soleil si le panneau est articulé en un point comme dans le brevet FR 99 11806, la taille du mat serait colossale et tout le panneau devrait être renforcé pour résister à la force du vent, il faut donc de préférence diviser cette surface photovoltaïque en plusieurs unités photovoltaïques, nous disons de 2 à 6 unités selon la longueur de la station ayant une surface de 3 à 6 m2, si ces unités devaient être traitées selon les moyens du brevet FR 99 11806 alors nous aurions 2 à 6 mats, ayant une section de 150 à 300 mm qui traverseraient le toit de la cellule d'habitation ce qui, en raison de la gène occasionnée à l'habitabilité, des problèmes posés à l'étanchéité et ceux liés à l'augmentation du poids, ne pourrait pas être acceptable. A cette solution qui convient pour de petites surfaces, le présent brevet préfère une triple articulation basée sur une fixation de la face inférieure du panneau en 3 points situés sur un cercle de diamètre 30 à 150 cm, centré sur l'intersection des diagonales, les 3 points sur le cercle occupant les sommets d'un triangle équilatéral, dont un des côtés est parallèle au coté avant du panneau, selon l'avant du véhicule et situé du côté avant du panneau (ainsi le polygone de sustentation sur lequel s'appuie le panneau est important et permet de travailler avec des bras moins dimensionnés). Sur ces points agissent des rotules d'articulation - doubles coudes ouverts, rotatifs, lesquels reçoivent la poussée de bras reliés au châssis, dont le mouvement est assuré par des vérins commandés manuellement ou automatiquement pour prendre la meilleure orientation, à l'arrêt, par rapport au soleil. L'orientation au soleil s'effectue par la mise en position haute et simultanée des trois bras, le bras avant côté soleil est alors abaissé puis relevé jusqu'à la position de plus grand ampérage, c'est alors le tour du bras arrière, le panneau a alors la meilleure orientation, le suivi du soleil pendant une à trois heures sera effectué grâce à la poussée continue du bras arrière. En sachant que ce dispositif est limité dans son effet par les zones d'ombre que les panneaux se font les uns aux autres et que l'on ne peut de ce fait envisager un suivi complet du déplacement du soleil sans avoir à éloigner exagérément les panneaux solaires les uns des autres.

L'objet du second dispositif : permettre à l'acquéreur d'un Camping-car électrique à station photovoltaïque embarquée amovible, suivant les moyens économiques dont il dispose, de pratiquement doubler voire tripler la puissance de la Station, au moyen de surfaces photovoltaïques superposées et déployées sur le principe des tiroirs ou encore sur celui du losange. Les avantages procurés par ces augmentations de surface sont d'une part de doubler ou de tripler la puissance de l'installation et diviser, par deux ou par trois, les temps de recharge des batteries d'accumulateurs électriques et, ces véhicules ayant toujours à rechercher le plus grand ensoleillement possible, de mettre néanmoins à l'ombre des panneaux photovoltaïques le Camping-car pour un plus grand confort des utilisateurs.
Il faut noter que ces solutions conservent le principe de la station multi panneaux pour éviter d'avoir à sur-dimensionner les éléments supports ainsi que les éléments mobiles afin que l'ensemble ne soit pas pénalisé par le poids mais aussi pour qu'en cas de panne, il soit possible d'isoler le panneau de l'ensemble du système et pouvoir procéder aux réparations. A noter encore que, compte tenu de l'accroissement considérable des surfaces et de l'augmentation des forces engendrées par le vent qui peuvent en résulter, des points d'ancrage fixes de ces panneaux avec la structure porteuse sont prévus ce qui interdit tout suivi, même partiel, du soleil dans sa course. Néanmoins, le positionnement des panneaux déployés s'effectue automatiquement selon un angle de 30° par rapport au plan de la surface du toit de la cellule pour, d'une part, une meilleure incidence des rayons du soleil et , d'autre part, ne pas avoir d'immédiate proximité des panneaux solaires avec le dessus du toit de la cellule d'habitation ce qui présente l'avantage de diminuer la chaleur transmise à la cellule et favorise une meilleure éliminations des calories des panneaux photovoltaïques et donc leur rendement.

Le second dispositif est un dispositif à tiroir qui fait apparaître sous chacun des 2 à 6 panneaux solaires auxquels sont fixées des glissières, un autre panneau solaire qui se déplace sur ces glissières selon un mouvement perpendiculaire aux côtés du véhicule. Pour chacun des 2 à 6 couples de panneaux de la station et préalablement à la sortie du panneau inférieur caché et supporté par le panneau supérieur, quatre biellettes (deux grandes et deux petites), disposées en couples non identiques sur chacun des cotés de ce panneau, opposés et perpendiculaires au grand côté du châssis de la station, permettent, à l'aide de vérins agissant symétriquement sur une des biellettes de part et d'autre du panneau solaire, d'effectuer le soulèvement de l'ensemble selon un angle de 30° avec celui du toit du véhicule et selon un axe de rotation du plan du panneau parallèle à l'arrête que forme le plan du toit avec celui d'un des côtés de la cellule d'habitation. Ainsi, le couple de panneaux, supérieur et inférieur superposés, est-t-il dégagé du châssis de la station, puis il prend cet angle de 30° avec le toit, permettant par le moyen de câble enroulé sur un tambour ou encore de système à crémaillère de libérer le panneau inférieur qui glisse doucement jusqu'à sa position de travail où il est alors verrouillé. Ce même processus est effectué simultanément avec chacun des 2 à 6 unités de panneaux constituant la Station photovoltaïque. Ce dispositif à deux panneaux superposés et pour un total de deux à six de ces unités pour l'ensemble de la station, peut encore être repris pour un montage à 3 panneaux superposés et une station comprenant alors deux à six de ces unités. Dans ce cas le panneau du milieu porte les glissières du panneau inférieur et celles du panneau supérieur, les mouvements de glisse opposés du panneau inférieur et du panneau supérieur sont assurés par des crémaillères portées par le panneau central. Tout comme dans le dispositif précédent, l'ensemble que constitue les trois panneaux est d'abord surélevé pour être dégagé du cadre du châssis, puis, mû par des vérins, des bras à une articulation reliés au châssis et de taille identique et adaptée, placés de façon symétrique sur chacun des côtés opposés et perpendiculaires du panneau central au grand côté du châssis. Les mises en action de ces derniers pouvant être effectués tous ensemble ou par deux se trouvant d'un même côté du véhicule, séparément et ceci, pour chacune des 2 à 6 unités constituant la station photovoltaïque.

Un troisième dispositif pourra encore être utilisé dans le cas ou des ensembles de trois panneaux superposés seraient retenus pour chacun ces 2 à 6 unités constituant la station photovoltaïque, selon cette fois le procédé de la boite à outils à coffres superposés, les coffres étant cette fois remplacés par les panneaux solaires et les biellettes qui assurent le mouvement des panneaux les uns par rapport aux autres ne sont plus reliées au châssis mais de panneau à panneau. Un autre jeu de bras vérins, comme dans la seconde partie du dispositif précédent, assure le levage pour donner l'amplitude nécessaire au mouvement des panneaux les uns par rapport aux autres puis ensuite de permettre de donner la bonne inclinaison au plan photovoltaïque ainsi créé.

Ayant choisi d'embarquer la Station Photovoltaïque et ce faisant de la placer sur la totalité du toit du camping-car, c'est-à-dire de la capucine jusqu'à l'arrière du véhicule, les problèmes de dégradations et de vandalisme se trouvent aussi très considérablement réduits, il suffit pour s'en convaincre, d'imaginer que l'installation de la station Photovoltaïque se fasse sur un plateau tracté par le véhicule électrique. Outre l'encombrement, les difficultés de circulation, de manoeuvre et de parking, on peut constater que les panneaux solaires sont alors accessibles trop facilement au vandalisme, voire fragiles en cas de petites collisions, ce qui enlève beaucoup de fiabilité à l'ensemble et peut aussi entraîner des coûts de réparation rédhibitoires.
La solution de station tractable par un véhicule électrique ne peut donc être retenue que si elle est mise hors de portée, par exemple si la plate-forme est en fait le toit d'une caravane ce qui constitue une alternative à celle proposée par le Camping-car.

Pour ces raisons, le positionnement de la station Photovoltaïque s'effectue au minimum à 2m de hauteur par rapport au sol, de préférence autour de 3m et au maximum à 3m50 (en gardant le souci de l'habitabilité), sur les structures supérieures du Camping-Car (ou de la caravane). Bien entendu, la carrosserie de la structure d'habitation du Camping-Car (ou de la Caravane) est renforcée pour tenir compte de la charge placée sur le toit qui se situera entre 100 et 400 kg, c'est à dire environ 8 à 15kg/m². **(****Figure 1****)**

Compte tenu de la puissance de la Station photovoltaïque qui est comparable voire supérieure aux puissances installées sur le toit de l'habitation, le présent brevet, lorsque le véhicule est de retour à son parking, revendique sa capacité à être pleinement une source d'approvisionnement pour la maison, la villa. En se basant sur la durée de vie d'une station photovoltaïque, qui est pour les panneaux solaire de l'ordre de 25 à 30 ans tandis que les éléments porteurs et mobiles de la station sont simples, robustes et faciles à changer, ce, alors que l'on ne peut pas en espérer autant du véhicule porteur, le présent brevet revendique une réelle facilité de démontage de la station de son véhicule porteur auquel elle est assujettie par emboîtement sur le tour du toit de la cellule et boulonnage sur des pattes placées en saillie sur le tour du toit, tandis que le câblage électrique au sortir de la station photovoltaïque est branché en connectique industrielle sur un socle permettant un branchement et un débranchement rapide. Usant de cette capacité, la station photovoltaïque pourra être placée, pendant les temps où le véhicule s'éloigne peu de l'habitat, sur un portique prévu à cet effet, de ce portique tous les dispositifs de connectique et de régulation sont déjà en place pour alimenter la maison mais aussi le véhicule qui vient le soir s'y brancher. L'avantage de cette solution c'est que les techniques utilisées étant faites suivant les normes demandées pour les installations effectuées sur nos toits, on pourra envisager de façon sérieuse de reverser le courant à un réseau de distribution d'électricité et préserver ainsi la durée de vie des batteries électriques du fait d'un moins grand nombre de cycles d'utilisation effectués, tandis que le portique sera lui conçu pour diminuer la prise au vent et accroître la rigidité des panneaux solaires par le biais d'un haubanage ou de fixations appropriés afin d'atteindre la solidité des installations faites sur nos toits et ne plus demander un contrôle fréquent comme lorsque la Station est installée sur le toit du Camping-car Solaire.

### CARACTERISTIQUES DE L'INVENTION

Pour ce qui concerne le présent brevet, l'idée consiste à embarquer, sur un véhicule électrique utilitaire léger de 3.5 T autorisé en charge, à traction ou à propulsion électrique, carrossé en Camping-car, une station de production d'électricité photovoltaïque amovible d'une puissance allant de 1 kW à 6 kW, suivant la surface attribuée aux récepteurs photovoltaïques, c'est-à-dire bien au format des stations photovoltaïques que l'on installe aujourd'hui sur nos toits et cela, aux fins de recharger à leur capacité maximale les batteries d'accumulateurs électriques qui alimentent le moteur du véhicule.
1) La Station Photovoltaïque Embarquée Amovible (SPEA) **(****Figure 1****)** est **caractérisée en ce qu**'elle peut être installée sur le toit d'un véhicule utilitaire électrique carrossé en camping-car, qu'elle est de forte puissance (1 à 6 kW), qu'elle est constituée de 2 à 6 unités **(U)** photovoltaïques indépendantes orientables ou déployables afin de multiplier, suivant les dispositifs mis en oeuvre, par deux voire par trois leur surface photovoltaïque, toutes les unités ayant une surface (avant déploiement) comprise entre 3 et 6 m², ces unités étant disposées dans la longueur du châssis porteur de la SPEA, ce châssis étant positionné sur la totalité de la surface horizontale du toit d'un camping-car (ou d'une caravane) dont la surface minimale est de 10 m², de préférence 20 m² et maximale de 35 m², le véhicule porteur ayant un poids total en charge autorisé de 3.5 T, ladite SPEA étant mise en place sur le véhicule pour assurer les besoins énergétiques journaliers de son moteur, cette SPEA est encore positionnable sur un portique fixe (dont le grand axe est orienté de préférence au sud) conçu pour faciliter le démontage de la SPEA du toit du véhicule porteur et recevoir en position surélevée et de fonctionnement, sous un arrimage sécurisé, ladite SPEA pendant les temps où le véhicule porteur s'éloigne peu du lieu de son parking, lequel portique se comportant, dès lors, comme un hangar ayant reçu une couverture photovoltaïque, à l'égal de celle qui aurait pu être installée sur le toit de la maison, ainsi que l'équipement pour transformer et réguler le courant au standard normal et les branchements nécessaires, est en mesure d'assurer à la fois les besoins énergétiques de l'habitat et ceux du camping-car auquel il sert dans le même temps d'abri.
2) La Station Photovoltaïque Embarquée Amovible, est **caractérisée, en ce que,** lorsque ses unités photovoltaïques sont constituées de simples panneaux photovoltaïques, la fixation articulée, en trois points placés sous la face inférieure de chaque unité photovoltaïque, aux fins d'accroître la production d'électricité, a la capacité de permettre au panneau de s'orienter au soleil, les trois points de fixation étant positionnés sur un cercle de diamètre 30 à 150 cm, centré sur l'intersection des diagonales du panneau et les 3 points sur le cercle occupant les 3 sommets d'un triangle équilatéral, dont un des côtés est parallèle au coté avant du panneau, selon l'avant du véhicule et situé du côté avant du panneau, chaque point fixé au panneau, l'est par le moyen d'une rotule, elle-même jointe à un double coude rotatif, lui-même emboîté, tout en restant libre de son mouvement de rotation, sur l'extrémité d'un double bras articulé poussé par des vérins, le rôle joué par la rotule et le double coude rotatif étant de compenser la variation de longueur entre le mouvement circulaire du point de fixation sous le panneau (quand un seul bras est abaissé) et celui vertical du sommet du double bras articulé, l'orientation au soleil s'effectuant par la mise en position haute et simultanée des trois doubles bras articulés, le double bras articulé avant (côté soleil) étant alors abaissé puis relevé jusqu'à la position de plus grand ampérage, puis le double bras articulé arrière ayant effectué la même opération et le panneau solaire ayant alors pris la meilleure orientation par rapport au soleil, le suivi du soleil s'effectue alors pendant une à trois heures par la poussée continue du bras arrière sur la face arrière du panneau photovoltaïque.

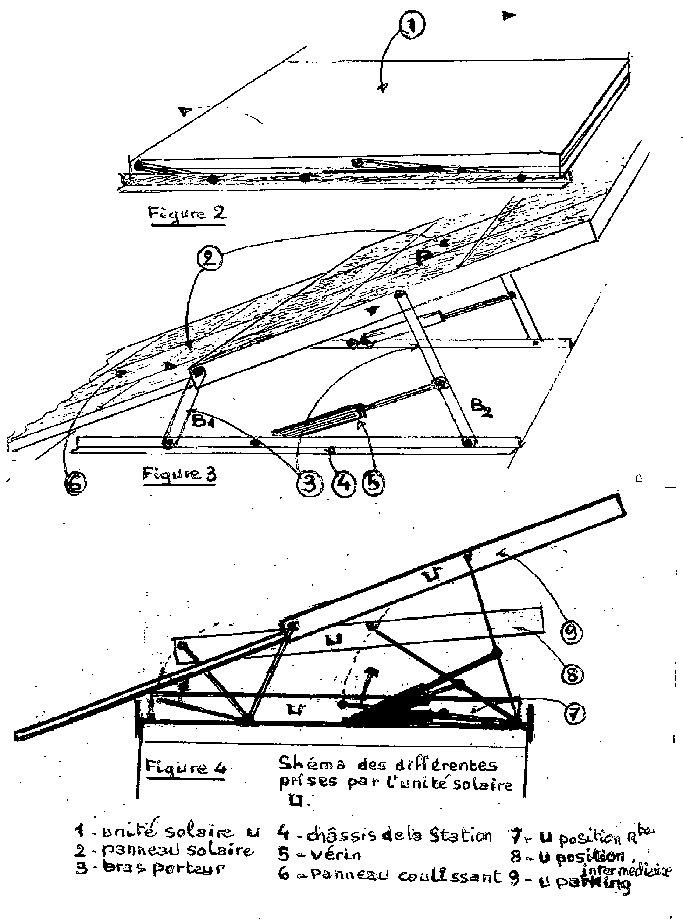

La Station Photovoltaïque Embarquée Amovible, est **caractérisée, en ce qu**'un dispositif à tiroir appliqué à chaque unité constituant la SPEA, permet de faire apparaître, sous chacun des 2 à 6 panneaux solaires supérieurs correspondants et auxquels sont fixées des glissières, un autre panneau solaire **(****Figures 2 et 3****)** qui se déplace sur ces glissières selon un mouvement perpendiculaire aux côtés du véhicule, ce faisant, pour chacun des 2 à 6 couples de panneaux constituant les unités de la SPEA et préalablement à la sortie du panneau inférieur caché et supporté par le panneau supérieur, quatre biellettes (deux grandes et deux petites), disposées en couple non identique en taille sur chacun des côtés de ce panneau, opposés et perpendiculaires au grand côté du châssis de la station **(****Figure 3****)**, permettent, à l'aide de vérins agissant symétriquement sur une des biellettes de part et d'autre du panneau solaire, d'effectuer le soulèvement de l'ensemble selon un angle de 30° avec celui du toit du véhicule et selon un axe de rotation du plan du panneau parallèle à l'arrête que forme le plan du toit avec celui d'un des côtés de la cellule d'habitation, le couple de panneaux, supérieur et inférieur superposés, est alors dégagé du châssis de la station, **(****Figures 3 et 4****)** puis il prend cet angle de 30° avec le toit, permettant par le moyen de câble enroulé sur un tambour ou encore de système à crémaillère de libérer le panneau inférieur qui glisse doucement jusqu'à sa position de travail où il est alors verrouillé, cette opération est effectuée simultanément sur chacun des 2 à 6 unités de panneaux constituant la SPEA, ce dispositif peut aussi être repris pour un montage à 3 panneaux superposés et une SPEA comprenant alors deux à six de ces unités à 3 panneaux superposés, dans ce cas le panneau du milieu porte les glissières du panneau inférieur et celles du panneau supérieur, les mouvements de glisse opposés du panneau inférieur et du panneau supérieur sont assurés par des crémaillères portées par le panneau central, tout comme dans le dispositif précédent, l'ensemble que constitue les trois panneaux est d'abord surélevé pour le dégager du cadre du châssis, puis des doubles biellettes articulées, de taille identique et adaptée, placées de façon symétrique sur chacun des côtés opposés et perpendiculaires du panneau central au grand côté du châssis, assurent alors le mouvement, à l'aide d'un vérin par biellette, les mises en action de ces derniers pouvant être effectués tous ensemble ou par deux se trouvant d'un même côté du véhicule, séparément et ceci, s'exerçant simultanément ou non pour chacun des 2 à 6 unités constituant la SPEA.

La Station Photovoltaïque Embarquée Amovible, est **caractérisée, en ce qu**'un dispositif à tiroir appliqué à chaque unité constituant la SPEA, permet de faire apparaître, sous chacun des 2 à 6 panneaux solaires supérieurs correspondants et auxquels sont fixées des glissières, un autre panneau solaire **(****Figures 2 et 3****)** qui se déplace sur ces glissières selon un mouvement perpendiculaire aux côtés du véhicule, ce faisant, pour chacun des 2 à 6 couples de panneaux constituant les unités de la SPEA et préalablement à la sortie du panneau inférieur caché et supporté par le panneau supérieur, quatre biellettes (deux grandes et deux petites), disposées en couple non apparié sur chacun des cotés de ce panneau, opposés et perpendiculaires au grand côté du châssis de la station **(****Figure 3****),** permettent, à l'aide de vérins agissant symétriquement sur une des biellettes de part et d'autre du panneau solaire, d'effectuer le soulèvement de l'ensemble selon un angle de 30° avec celui du toit du véhicule et selon un axe de rotation du plan du panneau parallèle à l'arrête que forme le plan du toit avec celui d'un des côtés de la cellule d'habitation, le couple de panneaux, supérieur et inférieur superposés, est alors dégagé du châssis de la station, **(****Figures 3 et 4****)** puis il prend cet angle de 30° avec le toit, permettant par le moyen de câble enroulé sur un tambour ou encore de système à crémaillère de libérer le panneau inférieur qui glisse doucement jusqu'à sa position de travail où il est alors verrouillé, cette opération est effectuée simultanément sur chacun des 2 à 6 unités de panneaux constituant la SPEA, ce dispositif peut aussi être repris pour un montage à 3 panneaux superposés et une SPEA comprenant alors deux à six de ces unités à 3 panneaux superposés, dans ce cas le panneau du milieu porte les glissières du panneau inférieur et celles du panneau supérieur, les mouvements de glisse opposés du panneau inférieur et du panneau supérieur sont assurés par des crémaillères portées par le panneau central, tout comme dans le dispositif précédent, l'ensemble que constitue les trois panneaux est d'abord surélevé pour le dégagé du cadre du châssis, puis des doubles biellettes articulées, de taille identique et adaptée, placées de façon symétrique sur chacun des côtés opposés et perpendiculaires du panneau central au grand côté du châssis, assurent alors le mouvement, à l'aide d'un vérin par biellette, les mises en action de ces derniers pouvant être effectués tous ensemble ou par deux se trouvant d'un même côté du véhicule, séparément et ceci, s'exerçant simultanément ou non pour chacun des 2 à 6 unités constituant la SPEA.

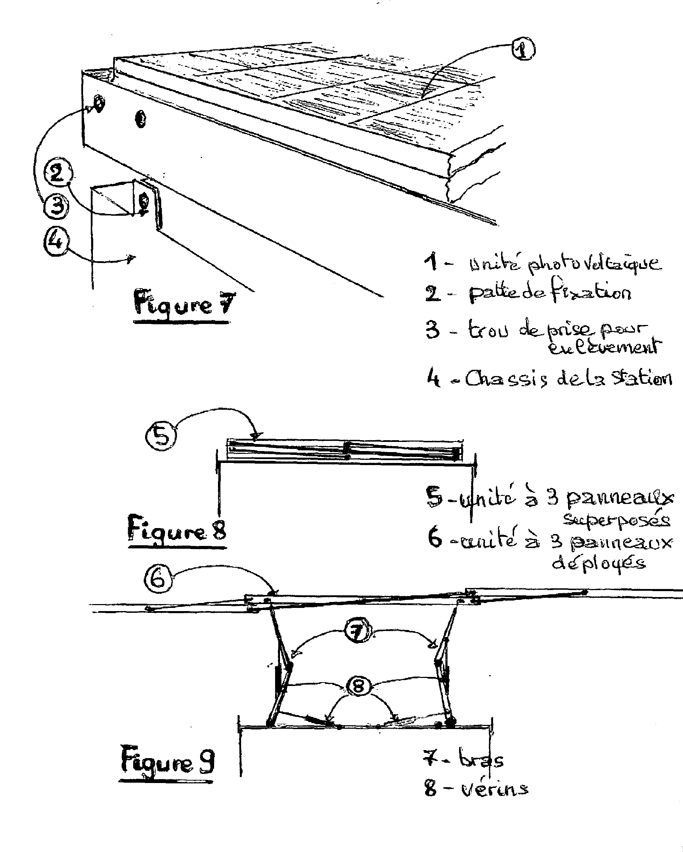

La Station Photovoltaïque Embarquée Amovible, est **caractérisée, en ce qu**'un dispositif du genre « boite à outils à coffres superposés » peut aussi être utilisé dans le cas ou des unités photovoltaïques à 3 panneaux superposés sont retenues pour la SPEA, dans lequel les coffres sont remplacés par les panneaux solaires tandis que les biellettes qui assurent le mouvement des panneaux les uns par rapport aux autres ne sont plus cette fois reliées au châssis de la SPEA mais de panneau à panneau, un autre jeu de bras-vérins, semblable à ceux utilisés dans la seconde partie du dispositif précédent, assure le levage pour donner l'amplitude nécessaire au mouvement des panneaux les uns par rapport aux autres, puis permet de donner la bonne inclinaison au plan photovoltaïque ainsi crée. **(****Figure 9****)**

La Station Photovoltaïque Embarquée est **caractérisée, en ce qu**'elle est installée sur le toit d'un Camping-car (ou d'une Caravane) à la hauteur minimale de 2m par rapport au sol, de préférence autour de 3m et au maximum à 3m80 de hauteur par rapport au sol et qu'elle est amovible, de sorte que tous les éléments de support et de mouvement qui assurent les mouvements des panneaux solaires, sont reliés pour leur ancrage au seul châssis de la station, il en va de même pour la connectique électrique qui est rassemblée afin que le désaccouplement de la SPEA d'avec le toit du véhicule se fasse à l'aide d'une connection simple de type industrielle facile à débrancher et sécuriser et que le cadre du châssis est emboîté simplement sur le contour extérieur rectangulaire du toit du véhicule et assujetti par quatre ou six boulons antivol qui traversent les montants du châssis et les pattes saillant du toit de la cellule. **(****Figure 7****)**

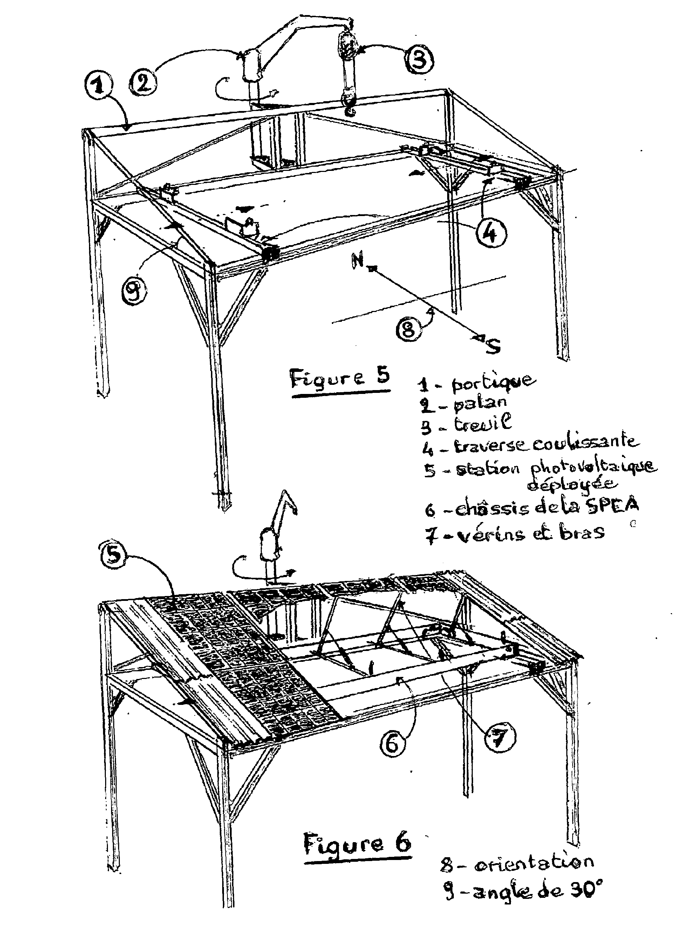

La Station Photovoltaïque Embarquée Amovible, est **caractérisée, en ce que** le portique **(****Figure 5****)** conçu pour recevoir la SPEA est équipé d'un palan capable de tourner sur son axe vertical, que le support de ce palan est fixé sur le grand côté Nord du portique, que ce palan est équipé de préférence d'un petit treuil amovible en vue d'exécuter les manoeuvres de désemboitement du châssis de la SPEA du cadre que constitue le toit du véhicule, puis les manoeuvres de positionnement sur deux traverses, lesquelles sont coulissantes, sans pouvoir se désemboiter, sur deux grandes poutres horizontales reliant les piliers du portique selon les grands côtés, et ceci afin de venir se positionner sous le châssis de la SPEA aux points de fixation pour y être boulonnées avec un système d'écrous antivol, que le portique est orienté de préférence avec le côté qui reçoit le palan exposé au Nord, qu'en outre, d'une part, le côté nord du portique comporte une traverse horizontale placée à la hauteur adéquat pour recevoir et verrouiller le haut des panneaux solaires lorsqu'ils prennent leur position de travail en faisant avec le plan horizontal un angle de 30° et, que d'autre part, sur le côté sud, dans les mêmes conditions, une traverse équipée des mêmes dispositifs de verrouillage est aussi mise en place pour recevoir les extrémités basses des panneaux solaires, à noter encore que les grands côtés du portiques peuvent aussi être réalisées en maçonnerie, enfin que le portique est équipé de tous les dispositifs de connectique et de régulation nécessaires pour alimenter la maison mais aussi le véhicule qui vient quand il en a besoin s'y brancher et y trouver aussi un abri. **(****Figure 6****)**

## Revendications

1. La Station Photovoltaïque Embarquée Amovible (SPEA) **(Figure 1)** est **caractérisée en ce qu'**elle peut être installée sur le toit d'un véhicule utilitaire électrique carrossé en camping-car, qu'elle est de forte puissance (1 à 6 kW), qu'elle est constituée de 2 à 6 unités **(U)** photovoltaïques indépendantes orientables ou déployables afin de multiplier, suivant les dispositifs mis en oeuvre, par deux voire par trois leur surface photovoltaïque, toutes les unités ayant une surface (avant déploiement) comprise entre 3 et 6 m², ces unités étant disposées dans la longueur du châssis porteur de la SPEA, ce châssis étant positionné sur la totalité de la surface horizontale du toit d'un camping-car (ou d'une caravane) dont la surface minimale est de 10 m², de préférence 20 m² et maximale de 35 m², le véhicule porteur ayant un poids total en charge autorisé de 3.5 T, ladite SPEA étant mise en place sur le véhicule pour assurer les besoins énergétiques journaliers de son moteur, cette SPEA est encore positionnable sur un portique fixe (dont le grand axe est orienté de préférence au sud) conçu pour faciliter le démontage de la SPEA du toit du véhicule porteur et recevoir en position surélevée et de fonctionnement, sous un arrimage sécurisé, ladite SPEA pendant les temps où le véhicule porteur s'éloigne peu du lieu de son parking, lequel portique se comportant, dès lors, comme un hangar ayant reçu une couverture photovoltaïque, à l'égal de celle qui aurait pu être installée sur le toit de la maison, ainsi que l'équipement pour transformer et réguler le courant au standard normal et les branchements nécessaires, est en mesure d'assurer à la fois les besoins énergétiques de l'habitat et ceux du camping-car auquel il sert dans le même temps d'abri.

2. La Station Photovoltaïque Embarquée Amovible, est **caractérisée**, selon la revendication 1, en ce que, lorsque ses unités photovoltaïques sont constituées de simples panneaux photovoltaïques, la fixation articulée, en trois points placés sous la face inférieure de chaque unité photovoltaïque, aux fins d'accroître la production d'électricité, a la capacité de permettre au panneau de s'orienter au soleil, les trois points de fixation étant positionnés sur un cercle de diamètre 30 à 150 cm, centré sur l'intersection des diagonales du panneau et les 3 points sur le cercle occupant les 3 sommets d'un triangle équilatéral, dont un des côtés est parallèle au coté avant du panneau, selon l'avant du véhicule et situé du côté avant du panneau, chaque point fixé au panneau, l'est par le moyen d'une rotule, elle-même jointe à un double coude rotatif, lui-même emboîté, tout en restant libre de son mouvement de rotation, sur l'extrémité d'un double bras articulé poussé par des vérins, le rôle joué par la rotule et le double coude rotatif étant de compenser la variation de longueur entre le mouvement circulaire du point de fixation sous le panneau (quand un seul bras est abaissé) et celui vertical du sommet du double bras articulé, l'orientation au soleil s'effectuant par la mise en position haute et simultanée des trois doubles bras articulés, le double bras articulé avant (côté soleil) étant alors abaissé puis relevé jusqu'à la position de plus grand ampérage, puis le double bras articulé arrière ayant effectué la même opération et le panneau solaire ayant alors pris la meilleure orientation par rapport au soleil, le suivi du soleil s'effectue alors pendant une à trois heures par la poussée continue du bras arrière sur la face arrière du panneau photovoltaïque.

3. La Station Photovoltaïque Embarquée Amovible, est **caractérisée**, selon la revendication 1, en ce qu'un dispositif à tiroir appliqué à chaque unité constituant la SPEA, permet de faire apparaître, sous chacun des 2 à 6 panneaux solaires supérieurs correspondants et auxquels sont fixées des glissières, un autre panneau solaire **(Figures 2 et 3)** qui se déplace sur ces glissières selon un mouvement perpendiculaire aux côtés du véhicule, ce faisant, pour chacun des 2 à 6 couples de panneaux constituant les unités de la SPEA et préalablement à la sortie du panneau inférieur caché et supporté par le panneau supérieur, quatre biellettes (deux grandes et deux petites), disposées en couple non identique en taille sur chacun des côtés de ce panneau, opposés et perpendiculaires au grand côté du châssis de la station **(Figure 3),** permettent, à l'aide de vérins agissant symétriquement sur une des biellettes de part et d'autre du panneau solaire, d'effectuer le soulèvement de l'ensemble selon un angle de 30° avec celui du toit du véhicule et selon un axe de rotation du plan du panneau parallèle à l'arrête que forme le plan du toit avec celui d'un des côtés de la cellule d'habitation, le couple de panneaux, supérieur et inférieur superposés, est alors dégagé du châssis de la station, **(Figures 3 et 4)** puis il prend cet angle de 30° avec le toit, permettant par le moyen de câble enroulé sur un tambour ou encore de système à crémaillère de libérer le panneau inférieur qui glisse doucement jusqu'à sa position de travail où il est alors verrouillé, cette opération est effectuée simultanément sur chacun des 2 à 6 unités de panneaux constituant la SPEA, ce dispositif peut aussi être repris pour un montage à 3 panneaux superposés et une SPEA comprenant alors deux à six de ces unités à 3 panneaux superposés, dans ce cas le panneau du milieu porte les glissières du panneau inférieur et celles du panneau supérieur, les mouvements de glisse opposés du panneau inférieur et du panneau supérieur sont assurés par des crémaillères portées par le panneau central, tout comme dans le dispositif précédent, l'ensemble que constitue les trois panneaux est d'abord surélevé pour le dégager du cadre du châssis, puis des doubles biellettes articulées, de taille identique et adaptée, placées de façon symétrique sur chacun des côtés opposés et perpendiculaires du panneau central au grand côté du châssis, assurent alors le mouvement, à l'aide d'un vérin par biellette, les mises en action de ces derniers pouvant être effectués tous ensemble ou par deux se trouvant d'un même côté du véhicule, séparément et ceci, s'exerçant simultanément ou non pour chacun des 2 à 6 unités constituant la SPEA.

4. La Station Photovoltaïque Embarquée Amovible, est **caractérisée**, selon la revendication 1, en ce qu'un dispositif du genre « boite à outils à coffres superposés » peut aussi être utilisé dans le cas ou des unités photovoltaïques à 3 panneaux superposés sont retenues pour la SPEA, dans lequel les coffres sont remplacés par les panneaux solaires tandis que les biellettes qui assurent le mouvement des panneaux les uns par rapport aux autres ne sont plus cette fois reliées au châssis de la SPEA mais de panneau à panneau, un autre jeu de bras-vérins, semblable à ceux utilisés dans la seconde partie du dispositif précédent, assure le levage pour donner l'amplitude nécessaire au mouvement des panneaux les uns par rapport aux autres, puis permet de donner la bonne inclinaison au plan photovoltaïque ainsi crée. **(Figure 9)**

5. La Station Photovoltaïque Embarquée Amovible, est **caractérisée**, selon la revendication 1, en ce que le portique **(Figure 5)** conçu pour recevoir la SPEA est équipé d'un palan capable de tourner sur son axe vertical, que le support de ce palan est fixé sur le grand côté Nord du portique, que ce palan est équipé de préférence d'un petit treuil amovible en vue d'exécuter les manoeuvres de désemboitement du châssis de la SPEA du cadre que constitue le toit du véhicule, puis les manoeuvres de positionnement sur deux traverses, lesquelles sont coulissantes, sans pouvoir se désemboiter, sur deux grandes poutres horizontales reliant les piliers du portique selon les grands côtés, et ceci afin de venir se positionner sous le châssis de la SPEA aux points de fixation pour y être boulonnées avec un système d'écrous antivol, que le portique est orienté de préférence avec le côté qui reçoit le palan exposé au Nord, qu'en outre, d'une part, le côté nord du portique comporte une traverse horizontale placée à la hauteur adéquat pour recevoir et verrouiller le haut des panneaux solaires lorsqu'ils prennent leur position de travail en faisant avec le plan horizontal un angle de 30° et, que d'autre part, sur le côté sud, dans les mêmes conditions, une traverse équipée des mêmes dispositifs de verrouillage est aussi mise en place pour recevoir les extrémités basses des panneaux solaires, à noter encore que les grands côtés du portiques peuvent aussi être réalisées en maçonnerie, enfin que le portique est équipé de tous les dispositifs de connectique et de régulation nécessaires pour alimenter la maison mais aussi le véhicule qui vient quand il en a besoin s'y brancher et y trouver aussi un abri. **(Figure 6)**

6. La Station Photovoltaïque Embarquée est **caractérisée**, selon la revendication 1, en ce qu'elle est installée sur le toit d'un Camping-car (ou d'une Caravane) à la hauteur minimale de 2m par rapport au sol, de préférence autour de 3m et au maximum à 3m80 de hauteur par rapport au sol et qu'elle est amovible, de sorte que tous les éléments de support et de mouvement qui assurent les mouvements des panneaux solaires, sont reliés pour leur ancrage au seul châssis de la station, il en va de même pour la connectique électrique qui est rassemblée afin que le désaccouplement de la SPEA d'avec le toit du véhicule se fasse à l'aide d'une connection simple de type industrielle facile à débrancher et sécuriser et que le cadre du châssis est emboîté simplement sur le contour extérieur rectangulaire du toit du véhicule et assujetti par quatre ou six boulons antivol qui traversent les montants du châssis et les pattes saillant du toit de la cellule. **(Figure 7)**
